# EUROPEAN PATENT SPECIFICATION

(11) **EP 2 309 839 B1**
(45) Date of publication and mention of the grant of the patent: **27.09.2017**
(21) Application number: 09769583.7
(22) Date of filing: 26.06.2009
(51) Int. Cl.: A01G 1/00, A01G 9/02

(54) **MODULAR GREEN ROOF BUILDING ELEMENT**
MODULARES BAUELEMENT FÜR GRÜNES DACH
ÉLÉMENT DE CONSTRUCTION DE TOIT VERT MODULAIRE

(30) Priority: 27.06.2008 GB 0811843
(43) Date of publication of application: 20.04.2011
(73) Proprietor: Grass Concrete Limited, West Yorkshire WF2 7RE (GB)
(72) Inventor: HOWDEN, Robert, Ellis, Wakefield West Yorkshire WF2 7RE (GB)
(74) Representative: Brookes IP
(86) International application number: PCT/GB2009/001612
(87) International publication number: WO 2009/156742

(56) References cited:
- WO-A-99/30553
- JP-A- H07 213 159
- US-A- 4 118 892
- US-A1- 2008 034 654
- US-B1- 6 178 690
- US-B1- 6 606 823

## Description

This application relates to modular green roof building elements which can be used to construct a green roof.

As people become more environmentally focused and wish to offset damage to the ecosystems at ground level caused by urbanisation, it is becoming ever more popular to provide buildings with green roofs i.e. roofs covered in vegetation (green or otherwise) in order to allow ecosystems to be established at roof level.

Further benefits of green roofs are the reduction and control of water run-off due to water being retained in the growing medium and vegetation that make up the green roof and a subsequent lag time being created between rainfall and eventual drainage collection of the percolating water.

Examples of prior art in this field are the green roofing systems produced by Langley Waterproofing Systems.

In known green roofing systems, it is usual to build the underlying roof decking at the same time as the green roof, rather than retrofit the green roof. This is in part due to weight considerations because many roofs could not support the weight of a traditional green roof, particularly when waterlogged, and also because specific drainage needs to be installed.

For example US6862842 and US6711851 disclose rectangular panels which essentially consist of vacuum moulded plastic trays with drain holes provided along the sides and on raised ribs along the bottom. The holes in the ribs are covered by a webbing or netting which is placed over the bottom of the trays to prevent root growth through the drain holes, then the panels are filled with growing medium and plants such as sedum. The panels are placed on a roof and excess rainwater is intended to flow through the tray out of the holes on the raised ribs then to flow along paths on the roof defined by the edges of the ribs.

A similar, but more complicated arrangement is shown in US20070101646, which discloses a plastic tray with tiny holes in the bottom and two layers of fabric laid on the bottom. It is stated emphatically that the two fabrics are "a huge factor in the success of the modular planter system". They consist of a first, lower hydrophilic fabric intended to hold 12 times its weight in storm or rain water, and a second layer of non-woven geotextile with an embedded core of entangled polypropylene fibres to which the roots of plants entangle so that they can be removed easily. It is suggested that sand, soil and plants are put in the tray, and if the tray is to be walked on an additional grid made of hollow cells is placed within the soil layer.

US2007/0094927 identified certain deficiencies in the trays of US6862842 and US6711851, most notably their essentially enclosed structure results in a tendency to overflow when rained on or watered excessively which causes roof damage, and death to the plants as they compete for the same nutrients and form a root ball which suffocates and starves the plants. In order to overcome these problems US2007/0094927 proposed a tray about 50cm x 25cm x 5cm in dimensions with large openings in its side walls and no openings in the bottom. Preferably enhanced water retention pads are placed on the bottom and a filter fabric (preferably needle punched non-woven polypropylene geotextile) covers the bottom and sidewalls. Excess water is intended to drain through the openings in the sides and off the roof.

However, even this system is not without its disadvantages, for example, the water retention pads make the system heavy and unsuitable for certain roofs and the idea that excess water will quickly drain sideways through the soil seems suspect.

Tray shaped panels have also been disclosed in Japanese patent literature: JP2005058026 discloses a rooftop greening structure comprising flowerpots with drainage holes in the bottom, and frames with wires along which vine plants can grow. The flowerpots are provided on legs so that water can escape onto the roof structure. JP20040105147 discloses tubs with raised drainage holes and a system of legs which keep the tubs horizontal on sloped roofs. Document JP-A-7213159 discloses a modular green roof building element wherein the bottom wall, side walls and partitioning walls are all formed from non-woven fabric. The present invention aims to provide an improvement on existing green roofing systems.

According to the invention there is provided a modular green roof building element according to claim 1.

Modular green roof building elements according to the invention can easily be installed on standard roof decking, such as felt, asphalt or membrane roofs, but spaced from the roof itself, by the spacers which could comprise battens or the like, but are preferably legs. Excess rain water can thus flow through the growing medium, such as soil, out through the bottom of each cell, via the water permeable floor and drip onto the decking where the standard drainage system will direct it towards a drain. The modular building elements according to this invention will support the growing material (e.g. soil) but allow the water to drain through onto the roof. Thus water on the roof will drain as usual and channels and grooves in the green roof building elements to direct the water off the roof (which could get clogged) are not required. Conveniently the mounting means could be provided by holes in a rigid part of the floor through which spacers could be fastened by screws, bolts or the like.

The provision of building elements made of cells is well known in the field of paving, and honeycomb pavers have been successfully employed for some 20 years. EP0875637 even proposed using them as part of the structure of a sloping green roof. However, when simply placed as the top layer of a green roofing system the drainage is not ideal and those skilled in the art subsequently pursued modular green-roofing elements based instead on trays. Existing honeycomb pavers do have their advantages though - they are easy to fit, sustain vegetation well and drain easily in the correct circumstances. The containment provided by the subdividing walls has shown no ill effects in terms of causing root balls, but means that the growing material is less likely to become dislodged. The subdividing walls also provide support against trampling of the vegetation when the building elements are walked on. The avoidance of water retaining fabrics leads to reduced weight, even when saturate. In contrast to the prior art where the drainage holes are sized depending on the amount of rain expected, it is intended that the desired water retention is dealt with separately to manufacture of the building element, by appropriate mix of water retaining polymers in the growing medium.

When installing the green roof according to this invention, further irrigation could be achieved by altering the drainage system to include a collection tank for the excess water and a sprinkler system with nozzles extending above the height of the peripheral walls to re-distribute the excess rain water as and when it is required.

Preferably the water permeable floor comprises a geo-textile such as woven or non-woven polyester or polypropylene.

Preferably the peripheral walls of the modular green roof element are adapted to interface with the peripheral walls of another modular green roof building element. This interface avoids leaving gaps between building elements which could result in an undesirable aesthetic effect caused by gaps in the planting since the space would not contain any growing medium, it also avoids the possibility of the growing medium such as soil or other detritus falling down through the gaps where there is no floor, this could harm the drainage or lead to plant growth directly on the roof which is undesirable as it can lead to roots damaging the waterproofing and structure of the roof.

More preferably, the peripheral walls of the modular green roof building element are adapted to tessellate with the peripheral walls of identical modular green roof building elements.

Preferably, the region within the peripheral walls is sub-divided by further walls. This sub-division improves the containment of the growing material.

More preferably, the water permeable floor is attached in the region of the sub-dividing walls as well as in the region of the peripheral walls. This additional attachment serves to spread out the stress on the attachment points and reduce the likelihood of the floor coming apart from the walls.

More preferably still, the sub-dividing walls are provided with flanges to which the floor is attached. The flanges increase the area to which the floor is attached and thus further reduce the stress on the attachment points. Moreover, the flanges themselves can support some of the weight of the growing material thus further reducing the pressure on the floor.

Preferably the flanges and sub-dividing walls form no more than 85% of the floor area of the modular green roof building element; more preferably the flanges and sub dividing walls form no more than 80% of the floor area of the modular green roof building element; more preferably the flanges and sub dividing walls form no more than 70% of the floor area of the modular green roof building element; more preferably the flanges and sub dividing walls form no more than 60% of the floor area of the modular green roof building element; more preferably the flanges and sub dividing walls form no more than 50% of the floor area of the modular green roof building element.

Preferably, the modular green roof building element has a honeycomb-like structure with the sub-dividing walls forming hexagonal cells.

Preferably, the modular green roof building element comprises a plastic paver with a membrane attached thereto to form the floor. By adapting an existing product to manufacture the modular green roof building element, production costs can be significantly reduced.

Preferably the modular green roof building element comprises at least 10 cells; more preferably the modular green roof building element comprises at least 25 cells; more preferably the modular green roof building element comprises at least 50 cells; more preferably the modular green roof building element comprises between 55 and 65 cells; more preferably the modular green roof building element comprises about 60 cells, most preferably exactly 60 cells.

Preferably the modular green roof building element has total dimensions of less than 100cm x 50cm x 15 cm, but more than 50cm x 25 x 3 cm; more preferably modular green roof building element has total dimensions of about 65 cm x 35 cm x 5cm. Preferably the cells of the modular green roof building element have a cross sectional area of more than 10 cm² but less than 100 cm²; and more preferably the cells have a cross sectional area of about 40 cm².

Preferably, when the modular green roof building element comprises mounting means for spacers, they are in the form of attachment points extending through the floor for attachment to legs. Such attachment points could be male or female connectors to connect with corresponding female or male connectors in legs. By providing the modular green roof building element with attachment points which can be attached to legs, installation of the modular green roof building element is facilitated because legs can be first attached to the roof then the modular green roof building element clipped in or alternatively shipped separately to the building elements to conserve space then attached to them prior to attachment to the roof decking.

Alternatively, the spacers comprise downwardly extending legs for attachment to roof decking.

Preferably, the total surface area of the roof which in use is covered by the bottom of the spacers is less than 20% of the floor area of the modular green roof building element; more preferably the total surface area of the roof which in use is covered by the bottom of the spacers is less than 10% of the floor area of the modular green roof building element; even more preferably the total surface area of the roof which in use is covered by the bottom of the spacers is less than 5% of the floor area of the modular green roof building element; and most preferably the total surface area of the roof which in use is covered by the bottom of the spacers is less than 3% of the floor area of the modular green roof building element.

In another aspect of the invention, there is provided a leg having a foot suitable for attachment to a roof decking and adapted to engage with attachment means on the underneath of a modular green roof building element.

Preferably, the legs are provided with adhesive-based closed cell polythene pads which are particularly appropriate for attachment to felt, asphalt or membrane roofs.

Alternatively, the legs may be provided with feet having holes therein through which screws can be inserted to attach the legs to the roof.

In a further aspect of the invention, there is provided a kit of parts comprising a plurality of modular green roof building elements as defined above together with a plurality of legs as defined above.

According to yet another aspect of the invention, there is provided a method of installing a green roof comprising attaching a plurality of modular green roof building elements as defined above to a roof via spacers such that the plurality of modular green roof building elements are situated next to each other.

Preferably, the spacers comprise legs and the method includes the step of adhering the legs to the roof via adhesive on feet of the legs.

Alternatively, the method comprises the step of attaching the spacers to the roof decking using fastening means then attaching the modular green roof building elements to the spacers.

As a further alternative, the method may comprise installing the spacers using fastening means tightened with a fastener inserted through a hole in the floor of the modular green roof building element then covering the hole in the floor.

Preferably, the method further comprises filling the modular green roof building elements with a growing material once they are attached to the roof.

Alternatively, the method comprises filling the modular green roof building element with a growing medium prior to attaching it to the roof. In any of these methods, preferably the total surface area of the roof that is covered by the spacers is less than 5% of the area covered by each modular building element.

The invention may be understood more readily and various other aspects of the other features of the invention will become apparent in consideration of the following description.

The invention will now be described by way of example only with reference to the accompanying drawings in which:
Figure 1 shows a perspective view of one embodiment of a modular green roof building element according to the invention;
Figure 2 shows a top plan view of the modular green roof building element shown in Figure 1;
Figure 3 shows an underneath plan view of the modular green roof building element of Figures 1 and 2 attached to two legs;
Figure 4 shows an end view of the modular green roof building element and legs shown in Figure 3;
Figure 5 shows a side view of the modular green roof building element and legs shown in Figure 3;
Figure 6 shows a partial cross-section of two modular green roof building elements;
Figure 7 shows a partial cross-section of two modular green roof building elements connected to one another;
Figure 8 shows a plan view of four modular green roof building elements connected to one another;
Figure 9 shows a side view of one embodiment of a leg according to the invention;
Figure 10 shows a plan view of the leg shown in Figure 9; and
Figure 11 is a section taken on the line X-X in Figure 10 in the direction of the arrows.

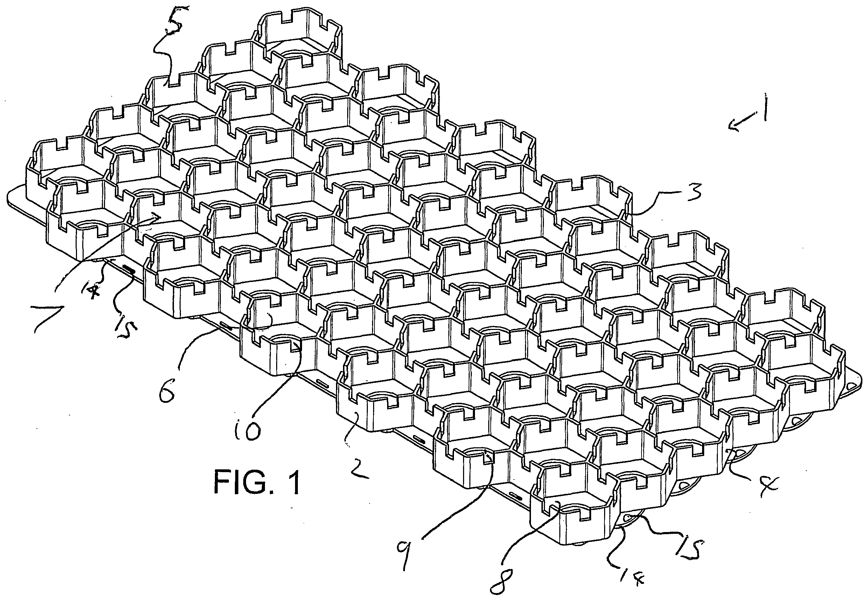

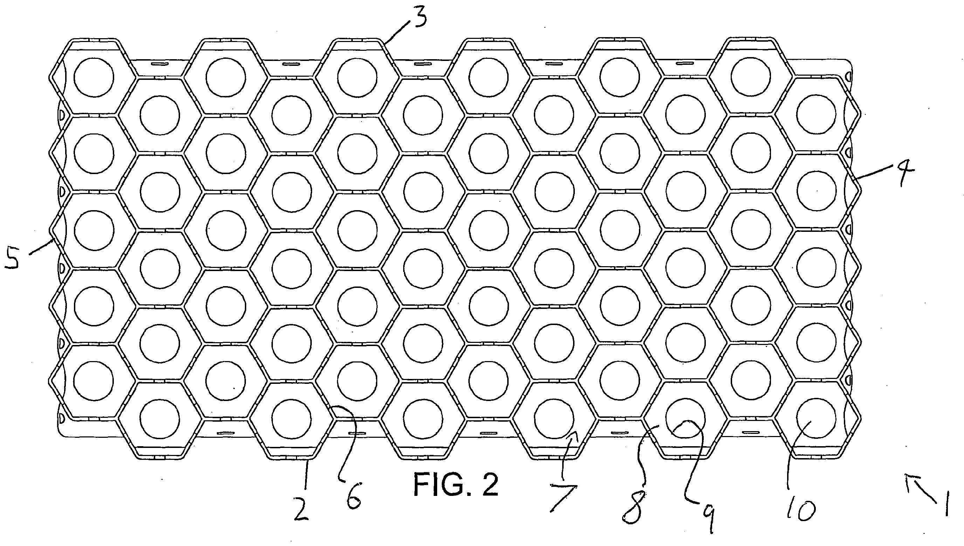

Referring to Figures 1 and 2, the modular green roof building element 1 is basically shaped like a slice of honeycomb with two broadly parallel peripheral side-walls 2 and 3 and two broadly parallel peripheral end walls 4 and 5. The other walls 6 of the honeycomb structure sub-divide the region between the peripheral walls 2, 3, 4, 5 into smaller hexagonal cells 7. Each modular green roof building element is conveniently about 65 cm long and 35 cm wide split into five cells widthwise from side-wall 3 to side-wall 2 and 12 cells lengthwise from end wall 5 to end wall 4 making a total of 60 cells 7 each about 6 cm in diameter.

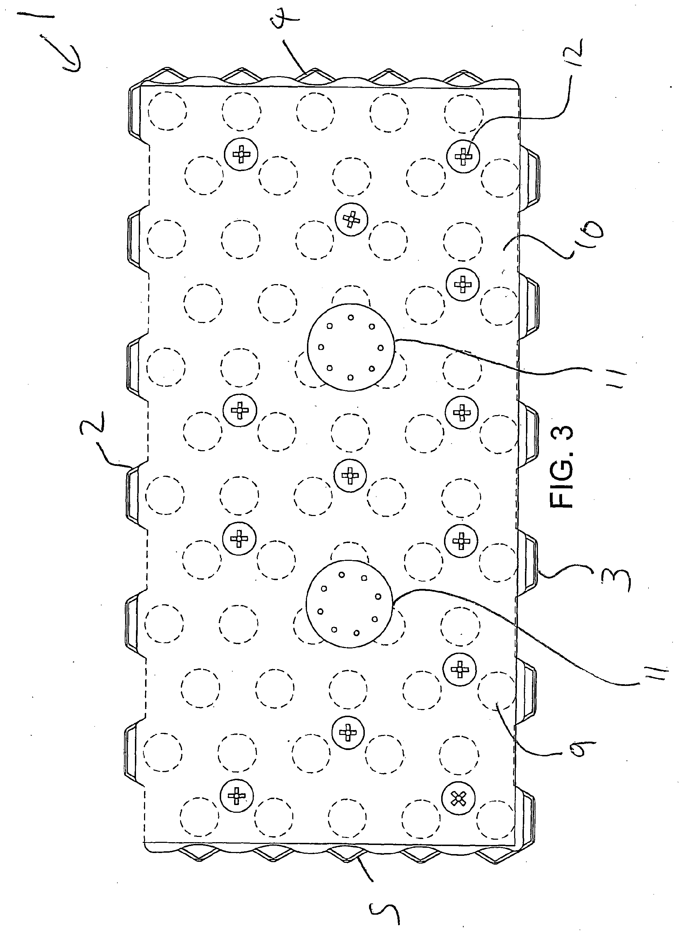

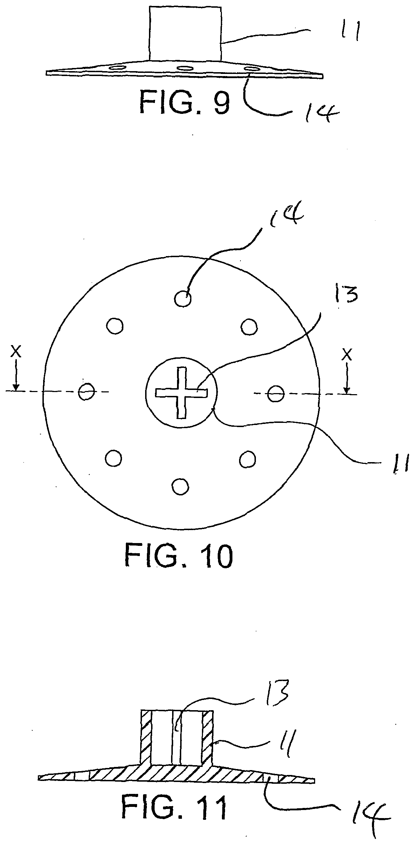

Flanges 8 extend inwardly from the peripheral walls 2, 3, 4, 5 and sub-dividing walls 6 such that the cells 7 are cup-shaped with a hole 9 in the middle of the bottom of each cup. Beneath the holes 9 a water permeable fabric 10 which is impermeable to a growing medium such as soil is attached to the flanges 8, for example by an adhesive bond or steel staples. It can be seen particularly in Figure 3 that the layer of water permeable fabric which makes up the floor extends across the whole of the floor of the modular green roof building element so that there is no space for soil or other growing media to fall through the holes and out of the bottom of the building element. Figure 3 also shows two spacers in the form of legs 11 which extend from the bottom of the modular green roof building element 1 to sit on or to be attached to the roof. The legs which are shown in more detail in Figures 9, 10 and 11 are attached to attachment points 12 in the modular green roof building element which consist of protrusions with a "+" shaped profile which fits into a similarly sized aperture 13 in legs 11 which is also "+" shaped in profile.

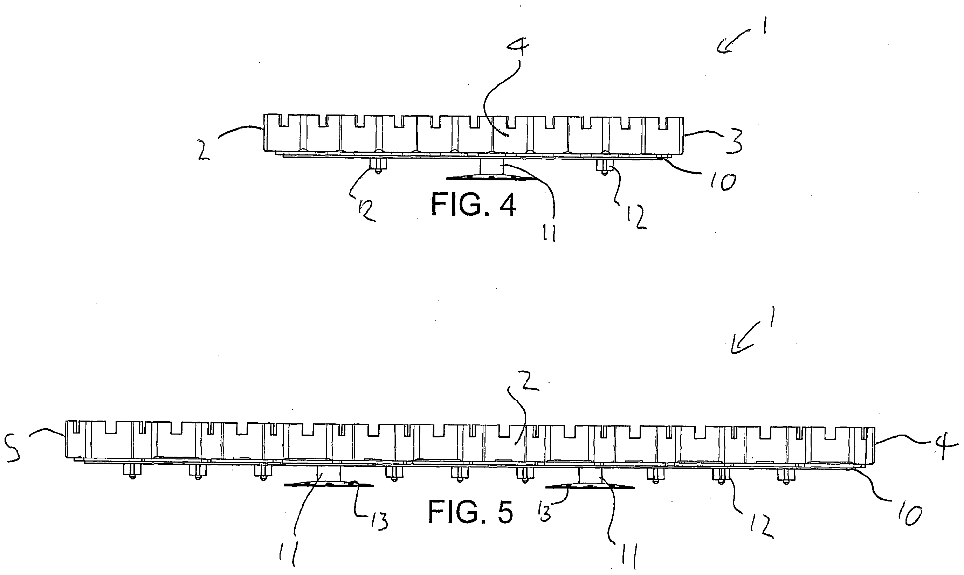

Figures 4 and 5 illustrate an end and a side view of a modular building element 1 attached to the legs 11 from which it can be seen that the legs 11 are relatively thin at the point where they attach to the modular green roof building element 1 but have broad feet 13. The thinness of the legs means that none of the holes 9 are obscured so drainage is not impeded whereas the broadness of the feet 13 ensures stability. The legs are suitably about 2 cm tall with 7 cm wide feet. Therefore the area of each foot 13 is about 38.5 cm². Accordingly, for each building element 1 of 2275 cm² only 77 cm² of the roof is covered so drainage will hardly be affected. 77 cm² per 2275 cm² amounts to about 3% of the surface area but less than 5%, less than 10% and less than 20% would all be preferred; obviously the smaller the surface of the roof taken up by the feet the better with respect to drainage. The shape of the legs 11 is also clear from Figures 9-11 showing enlarged views of the legs 11 alone. Also shown clearly in Figures 9-11 are holes 14 in the feet through which fasteners such as screws or bolts can be inserted to attach them to a roof.

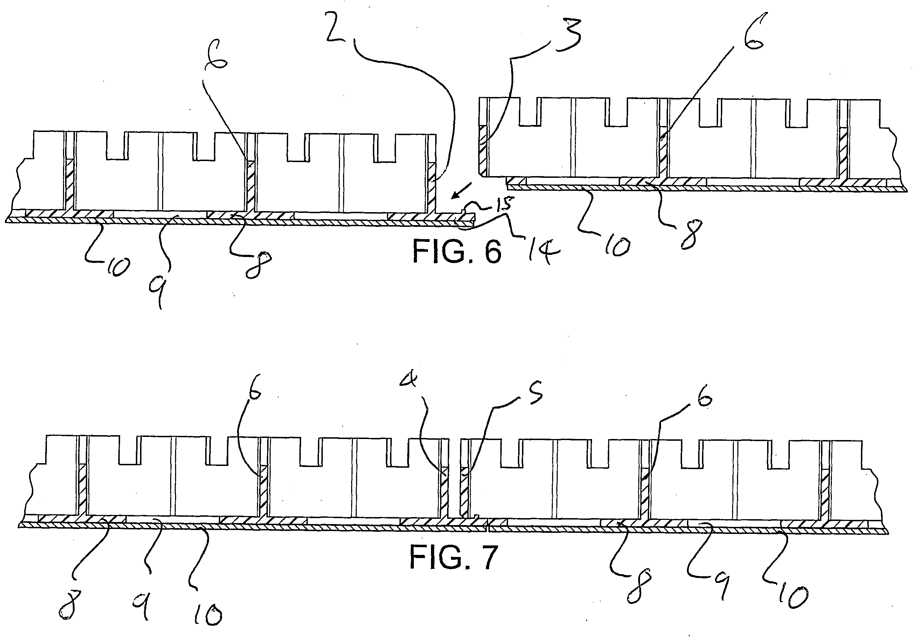

Figures 6 and 7 show how the modular building elements according to this invention connect to one another. It can be seen there is an outwardly extending flange 14 extending away from the floor of side-wall 2 which engages with a cutaway in the floor adjacent to side-wall 3. An upstanding projection 15 engages with the side-wall 3 to stop the green roof building elements moving away from each other. A similar arrangement of flanges 14 and protections 15 which engage with cutaways are found on the end-walls 4 and 5. It is important to note that the floor extends between adjacent modular green roof building elements so that the growing material is prevented from seeping through the gaps.

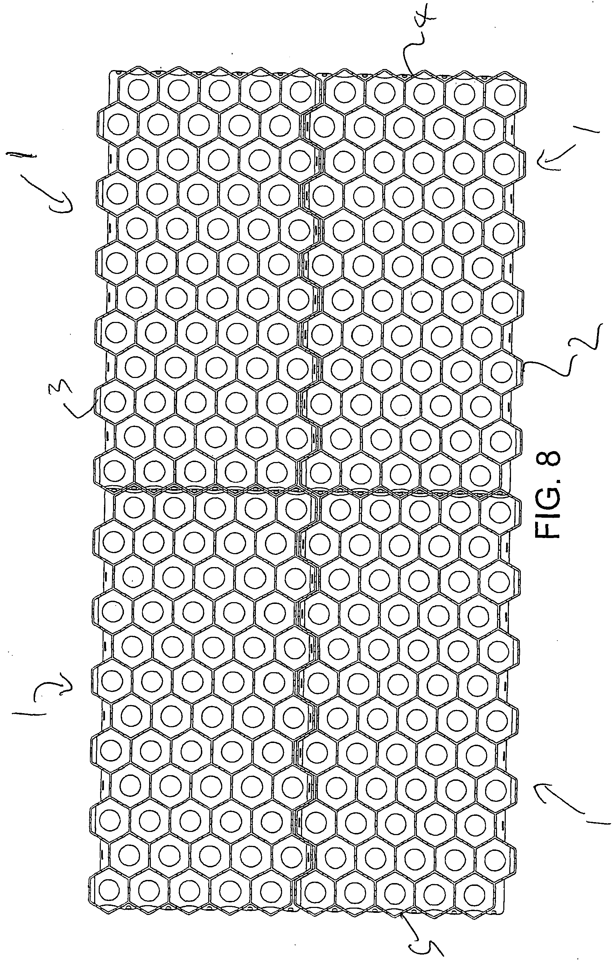

In order to form a green roof using the modular elements according to this invention, the legs 11 are clipped to attachment points 12 then a first modular element is put down on the floor of the roof. If desired or necessary, the feet can be attached to the roof, for example by using an adhesive to stick the bottoms of the feet 13 to the roof. A second modular building element is then clipped on to the first as shown in Figures 6 and 7 having first had legs 11 attached to its attachment points 12. A plan view of four such building elements all clipped together is shown in Figure 8 and this tessellating arrangement is simply continued until the entire roof is covered by modular building elements connected to one another. Once the building elements are in place, the cells 7 can be then filled with growing medium such as soil or more preferably soil incorporating moisture retaining polymers and seeds or live plants of the desired vegetation such as sedum can be planted. Alternatively, the modular green roof elements could be prefilled with the growing medium and/or plants. Where a stronger attachment to the roof is required, for example, due to the likelihood of strong winds or a sloped surface, once the feet are attached to the modular green roof elements when they are set down on the roof, screws can be inserted through holes 14 in the feet to attach them to the roof. In order to access the holes in the feet, the modular green roof building elements 1 may have certain cells with the holes 9 not covered by the water permeable fabric 10.

However, in order to prevent soil falling through these holes, once the modular building elements are in place, the holes should be mended by inserting a patch of water permeable fabric to cover the hole. Of course, since there are many cells through which water can permeate, it will not be absolutely necessary that the holes are covered by a water permeable membrane so long as the hole is covered by a membrane which is impermeable to the growing medium.

Incidentally, both the modular building element 1 and the legs 11 can be moulded from polypropylene although obviously other plastics and indeed other types of material will also be suitable.

## Claims

1. A modular green roof building element (1) adapted to contain a growing medium, the modular green roof building element (1) having peripheral walls (2,3,4,5) and sub dividing walls (6) so as to define cells (7) for retaining the growing medium and a floor comprising a membrane (10) which is water permeable, but impermeable to particles of the growing medium; the modular green roof building element (1) **characterised by** comprising spacers for spacing the floor of the modular green roof building element from a roof or mounting means (12) for attaching such spacers such that in use rainwater can flow from the top to the bottom of the cells and drain out through the water permeable floor (10).

2. A modular green roof building element (1) according to claim 1 wherein the water permeable floor (10) comprises a geotextile.

3. A modular green roof building element (1) according to claim 2 wherein the geotextile comprises woven or non-woven polyester.

4. A modular green roof building element (1) according to claim 2 wherein the geotextile comprises woven or non-woven polypropylene.

5. A modular green roof building element (1) according to any one of the preceding claims wherein the peripheral walls (2,3,4,5) are adapted to interface with the peripheral walls (2,3,4,5) of another modular green roof building element (1).

6. A modular green roof building element (1) according to any one of the preceding claims wherein the peripheral walls (2,3,4,5) are adapted to tessellate with the peripheral walls (2,3,4,5) of identical modular green roof building elements (1).

7. A modular green roof building element (1) according to any one of the preceding claims wherein the sub-dividing walls are provided with flanges (8) to which the floor (10) is attached.

8. A modular green roof building element (1) according to any one of the preceding claims having a honeycomb-like structure with the sub-dividing walls (6) forming hexagonal cells (7).

9. A modular green roof building element (1) according to any one of the preceding claims comprising a plastic paver with a membrane attached thereto to form the floor.

10. A modular green roof building element (1) according to any one of claims 1-9 comprising spacers in the form of downwardly extending legs (11) for attachment to roof decking.

11. A modular green roof building element (1) according to any one of the preceding claims, comprising attachment points (12) depending from the floor for attachment to legs (11).

12. A kit of parts comprising a plurality of modular green roof building elements (1) according to any one of claims 1-9 together with a plurality of spacers adapted to engage with the modular green roof building elements (1) via mounting means (12) thereon.

13. A method of installing a green roof comprising attaching a plurality of modular green roof building elements (1) according to any one of claims 1-11 to a roof via spacers such that the plurality of modular green roof building elements (1) are situated next to each other.

14. A method according to claim 14 wherein the total surface area of the roof that is covered by the spacers is less than 5% of the area covered by each modular building element (1).

## Patentansprüche

1. Modulares Gründach-Bauelement (1), das zur Aufnahme eines Kultursubstrats geeignet ist, wobei das modulare Gründach-Bauelement (1) Umfangswände (2, 3, 4, 5) und Unterteilungswände (6) aufweist, um Zellen (7) zum Aufnehmen des Kultursubstrats zu bilden, und einen Boden mit einer Membran (10) aufweist, welche wasserdurchlässig, jedoch für Partikel des Kultursubstrats undurchlässig ist; wobei das modulare Gründach-Bauelement (1) **dadurch gekennzeichnet ist, dass** es Abstandshalter aufweist, um den Boden des modularen Gründach-Bauelements von einem Dach zu beabstanden, oder Befestigungseinrichtungen (12) zum Anbringen derartiger Abstandshalter aufweist, derart, dass im Gebrauch Regenwasser von der Oberseite der Zellen zu deren Unterseite fließen kann und durch den wasserdurchlässigen Boden (10) ablaufen kann.

2. Modulares Gründach-Bauelement (1) nach Anspruch 1, bei welchem der wasserdurchlässige Boden (10) ein Geotextil aufweist.

3. Modulares Gründach-Bauelement (1) nach Anspruch 2, bei welchem das Geotextil Polyestergewebe oder -vlies aufweist.

4. Modulares Gründach-Bauelement (1) nach Anspruch 2, bei welchem das Geotextil Polypropylengewebe oder -vlies aufweist.

5. Modulares Gründach-Bauelement (1) nach einem der vorhergehenden Ansprüche, bei welchem die Umfangswände (2, 3, 4, 5) geeignet sind, mit den Umfangswänden (2, 3, 4, 5) eines anderen modularen Gründach-Bauelement (1) verbunden zu werden.

6. Modulares Gründach-Bauelement (1) nach einem der vorhergehenden Ansprüche, bei welchem die Umfangswände (2, 3, 4, 5) geeignet sind, ohne Zwischenraum mit den Umfangswänden (2, 3, 4, 5) identischer modularer Gründach-Bauelemente (1) zusammengefügt zu werden.

7. Modulares Gründach-Bauelement (1) nach einem der vorhergehenden Ansprüche, bei welchem die Unterteilungswände mit Flanschen (8) versehen sind, an welche der Boden angebracht ist.

8. Modulares Gründach-Bauelement (1) nach einem der vorhergehenden Ansprüche mit einer wabenartigen Struktur, wobei die Unterteilungswände (6) hexagonale Zellen (7) bilden.

9. Modulares Gründach-Bauelement (1) nach einem der vorhergehenden Ansprüche mit einem Kunststoffpflaster mit einer daran angebrachten Membran zur Bildung des Bodens.

10. Modulares Gründach-Bauelement (1) nach einem der Ansprüche 1 - 9, mit Abstandshaltern in Form von sich nach unten erstreckenden Beinen (11) zur Anbringung an der Dacheindeckung.

11. Modulares Gründach-Bauelement (1) nach einem der vorhergehenden Ansprüche mit Befestigungspunkten (12), welche von dem Boden zur Befestigung an Beinen (11) herabhängen.

12. Teilesatz mit mehreren modularen Gründach-Bauelementen (1) nach einem der Ansprüche 1 - 9 zusammen mit mehreren Abstandshaltern, die zum Zusammengreifen mit den modularen Gründach-Bauelementen (1) über daran befindliche Befestigungseinrichtungen (12) geeignet sind.

13. Verfahren zum Installieren eines Gründachs mit dem Schritt des Befestigens mehrerer modularer Gründach-Bauelemente (1) nach einem der Ansprüche 1 - 11 an einem Dach über Abstandshalter, derart, dass die mehreren modularen Gründach-Bauelemente (1) einander benachbart angeordnet sind.

14. Verfahren nach Anspruch 14, bei welchem die Gesamtfläche des Dachs, die von den Abstandshaltern bedeckt ist, weniger als 5% der von jedem der modularen Gründach-Bauelemente (1) bedeckten Fläche ist.

## Revendications

1. Elément de bâtiment à toit végétalisé modulaire (1) adapté pour contenir un milieu de croissance, l'élément de bâtiment à toit végétalisé modulaire (1) ayant des parois périphériques (2, 3, 4, 5) et des sous-cloisons de séparation (6) de manière à définir des cellules (7) en vue de retenir le milieu de croissance et un plancher comprenant une membrane (10) qui est perméable à l'eau, mais imperméable à des particules du milieu de croissance ; l'élément de bâtiment à toit végétalisé modulaire (1) étant **caractérisé en ce qu'**il comprend des entretoises pour espacer le plancher de l'élément de bâtiment à toit végétalisé modulaire d'un toit ou des moyens de montage (12) pour attacher de telles entretoises de telle sorte qu'en utilisation, l'eau de pluie puisse s'écouler de haut en bas des cellules et s'évacuer à travers le plancher perméable à l'eau (10).

2. Elément de bâtiment à toit végétalisé modulaire (1) selon la revendication 1, dans lequel le plancher perméable à l'eau (10) comprend un géotextile.

3. Elément de bâtiment à toit végétalisé modulaire (1) selon la revendication 2, dans lequel le géotextile comprend du polyester tissé ou non tissé.

4. Elément de bâtiment à toit végétalisé modulaire (1) selon la revendication 2, dans lequel le géotextile comprend du polypropylène tissé ou non tissé.

5. Elément de bâtiment à toit végétalisé modulaire (1) selon l'une quelconque des revendications précédentes, dans lequel les parois périphériques (2, 3, 4, 5) sont adaptées pour interfacer avec les parois périphériques (2, 3, 4, 5) d'un autre élément de bâtiment à toit végétalisé modulaire (1).

6. Elément de bâtiment à toit végétalisé modulaire (1) selon l'une quelconque des revendications précédentes, dans lequel les parois périphériques (2, 3, 4, 5) sont adaptées pour s'assembler en mosaïque avec les parois périphériques (2, 3, 4, 5) d'éléments de bâtiment à toit végétalisé modulaire identiques (1).

7. Elément de bâtiment à toit végétalisé modulaire (1) selon l'une quelconque des revendications précédentes, dans lequel les sous-cloisons de séparation sont pourvues de brides (8) auxquelles est attaché le plancher (10).

8. Elément de bâtiment à toit végétalisé modulaire (1) selon l'une quelconque des revendications précédentes, comportant une structure semblable à un nid-d'abeilles avec les sous-cloisons de séparation (6) formant des cellules hexagonales (7).

9. Elément de bâtiment à toit végétalisé modulaire (1) selon l'une quelconque des revendications précédentes, comprenant un pavé plastique auquel est attachée une membrane pour former le plancher.

10. Elément de bâtiment à toit végétalisé modulaire (1) selon l'une quelconque des revendications 1 à 9, comprenant des entretoises sous la forme de jambes s'étendant vers le bas (11) pour le raccordement à la surface du toit.

11. Elément de bâtiment à toit végétalisé modulaire (1) selon l'une quelconque des revendications précédentes, comprenant des points d'attache (12) dépendant du plancher pour le raccordement aux jambes (11).

12. Kit de pièces comprenant une pluralité d'éléments de bâtiment à toit végétalisé modulaire (1) selon l'une quelconque des revendications 1 à 9, conjointement avec une pluralité d'entretoises adaptées pour s'enclencher avec les éléments de bâtiment à toit végétalisé modulaire (1) via des moyens de montage (12) placés dessus.

13. Procédé d'installation d'un toit végétalisé comprenant l'attache d'une pluralité d'éléments de bâtiment à toit végétalisé modulaire (1) selon l'une quelconque des revendications 1 à 11 à un toit via des entretoises de telle sorte que la pluralité d'éléments de bâtiment à toit végétalisé modulaire (1) soient situés les uns à côté des autres.

14. Procédé selon la revendication 13, dans lequel la superficie totale du toit qui est couverte par les entretoises est inférieure à 5 % de la superficie couverte par chaque élément de bâtiment modulaire (1).
